# EUROPÄISCHE PATENTSCHRIFT

(11) **EP 0 525 415 B1**
(45) Veröffentlichungstag und Bekanntmachung des Hinweises auf die Patenterteilung: **03.08.1994**
(21) Anmeldenummer: 92111082.1
(22) Anmeldetag: 30.06.1992
(51) Int. Cl.: F16D 65/12, F16D 65/847

(54) **Schienenfahrzeugrad mit einer Bremsscheibe**
Railway vehicle wheel provided with a brake disc
Roue de véhicule ferroviaire comportant un disque de frein

(30) Priorität: 02.08.1991 DE 4125694
(43) Veröffentlichungstag der Anmeldung: 03.02.1993
(73) Patentinhaber: KNORR-BREMSE AG, 80710 München (DE)
(72) Erfinder: Wirth, Xaver, Dr., W-8045 Ismaning (DE)

(56) Entgegenhaltungen:
- DE-A- 3 935 635
- DE-B- 1 158 095
- DE-B- 1 175 721
- DE-C- 2 828 109

## Beschreibung

Die Erfindung betrifft ein Schienenfahrzeugrad mit wenigstens einer Bremsscheibe, wobei das Rad eine Radscheibe und einen axial verbreiterten, mittels einer Übergangsrundung anschließenden Nabenabschnitt und die Bremsscheibe einen am Nabenabschnitt zentrierten und mittels achsparalleler Schrauben gehaltenen Nabenring, von diesem im wesentlichen radial nach außen ragende Speichen und einen von diesen getragenen Reibring aufweist, wobei der Reibring sich seitlich nahe der Radscheibe befindet und radscheibenabgewandt eine Reibfläche aufweist.

Ein derartiges Schienenfahrzeugrad ist aus der DE-OS 31 45 563 bekannt. Der als einfacher Ringkörper ausgebildeter Nabenring trägt die mit ihm einstückigen Speichen, welche den Reibring hintergreifen und mit diesem vermittels radialer Feder-Nut-Führungen und einer Spannhülsensicherung verbunden sind. Die Verbindungsstelle der Speichen zum Reibring ist hierbei im mittleren Durchmesserbereich des Reibringes vorgesehen, der Reibring weist in diesem mittleren Bereich die Verbindungsstelle überragende Nocken auf, mittels welchen er sich gegen die Radscheibe axial abstützt. Der Druckschrift ist entnehmbar, daß bei Erwärmungen des Reibringes, wie sie während Bremsvorgängen auftreten, der Reibring sich durch Wärmedehnungen keglig verformt, wobei er am äußeren Umfang sich von der Radscheibe weg und am inneren Umfang zur Radscheibe hin verformt; die relativ aufwendige Verbindung zwischen den Speichen und dem Reibring soll diese Verformungen störungsfrei zulassen. Während Bremsungen mit derartigen Verformungen des Reibringes können an diesem Material-Fließvorgänge in der Reibflächenzone auftreten, derart, daß sich nach dem Erkalten des Reibringes eine gegensinnige Kegelform für diesen ergibt. Diese Verformungen des Reibringes und damit seiner Reibfläche können die Anpreß- und Reibvorgänge von Bremsbacken während Teil- und Vollbremsungen ungünstig beeinflussen, sie können zu Änderungen der Bremswirkung, örtlichen Überlastungen und ungleichmäßigem Verschleiß führen. Über das Vorhandensein von radialen Ventilationsrippen am Reibring ist der Druckschrift nichts entnehmbar.

Der DE-PS 1 040 065 ist ein mit ähnlichen Mängeln behaftetes Schienenfahrzeugrad mit beidseitig angeordneten Bremsscheiben entnehmbar, die Speichen sind hierbei durch gewölbte Blechringe ersetzt, welche am radialinneren Rand mit dem Reibring verbundvergossen sind. Die Reibringe weisen hierbei rückseitig, der Radscheibe zugewandt, radiale Ventilationsrippen auf, welche im radialmittleren Abschnitt der Reibringe axial an der Radscheibe anliegen und sich dort abstützen.

Zum Vermeiden der Reibring-Verformungen beim Erwärmen ist es aus der DE-0S 21 33 235 bekannt, die Reibringe in ihrem mittleren, radialen Bereich mit axiale Verschraubungen umgebenden Nocken zu versehen, mit welchen sie sich an der Radscheibe unmittelbar axial abstützen. Die axiale Verschraubung erfordert jedoch die Reibfläche radialmittig durchsetzende Schraubenbohrungen sowie Durchbohrungen der Radscheibe, welche beide zu Teileschwächungen und Ausgangsstellen von Spannungs- bzw. Wärmerissen führen können; die Schraubenbohrungen können zudem die Reibvorgänge ungünstig beeinflussen.

Die DE-PS 910 421 zeigt ein Schienenfahrzeugrad, welches in seinem Nabenbereich durch axiale Verschraubung mit einer Bremsscheibe verbunden ist, welche in axialem Abstand zum Rad einen belüftete, beidseitig Reibflächen aufweisenden Reibring besitzt. Der Nabenring der Bremsscheibe weist dabei an seinem radialinneren Rand einen axial zum Rad hin vorspringenden Ringflansch auf, welcher einen ihn umgebenden Ringflansch am Nabenabschnitt des Rades radial hintergreift und so die Bremsscheibe zentriert.

Es ist Aufgabe der Erfindung, ein Schienenfahrzeugrad mit wenigstens einer Bremsscheibe der eingangs genannten Art derart auszugestalten, daß bei einfacher und billiger Herstellungsmöglichkeit der Reibring der Bremsscheibe bei Erwärmungen zumindest nahezu mit seiner Reibfläche in einer Radialebene verbleibt, also keine kegligen Verformungen erfährt, die Reibvorgänge von Bremsbacken daher von solchen Verformungen ungestört bleiben. Zugleich soll eine gute Kühlluftführung für die Bremsscheibe ermöglicht werden.

Diese Aufgabe wird nach der Erfindung dadurch gelöst, daß die Bremsscheibe einstückig ist, ihr Nabenring einen den Nabenabschnitt seitlich übergreifenden und mit diesem verschraubten Radialringabschnitt und einen an diesen radialaußen anschließenden, sich zur Übergangsrundung hin erstreckenden und diese zumindest zu einem Teil mit Spiel übergreifenden Axialringabschnitt aufweist, wobei der Axialringabschnitt sich zur Radmitte hin radial erweitert, daß die Speichen im wesentlichen sich vom Axialringabschnitt nach radialaußen erstrecken, dünnwandig, im Umfangsrichtung wesentlich schwächer als in Axialrichtung ausgebildet sind, im Bereich ihrer Anbindung an den Reibring verdickt sind und in im Bereich zwischen dem Reibring und der Radscheibe befindliche, von ersteren ausgehende, radiale Ventilationsrippen übergehen.

Nach der weiteren Erfindung vorteilhafte Ausgestaltungsmöglichkeiten eines derartigen Schienenfahrzeugrades sind den Merkmalen der Unteransprüche entnehmbar.

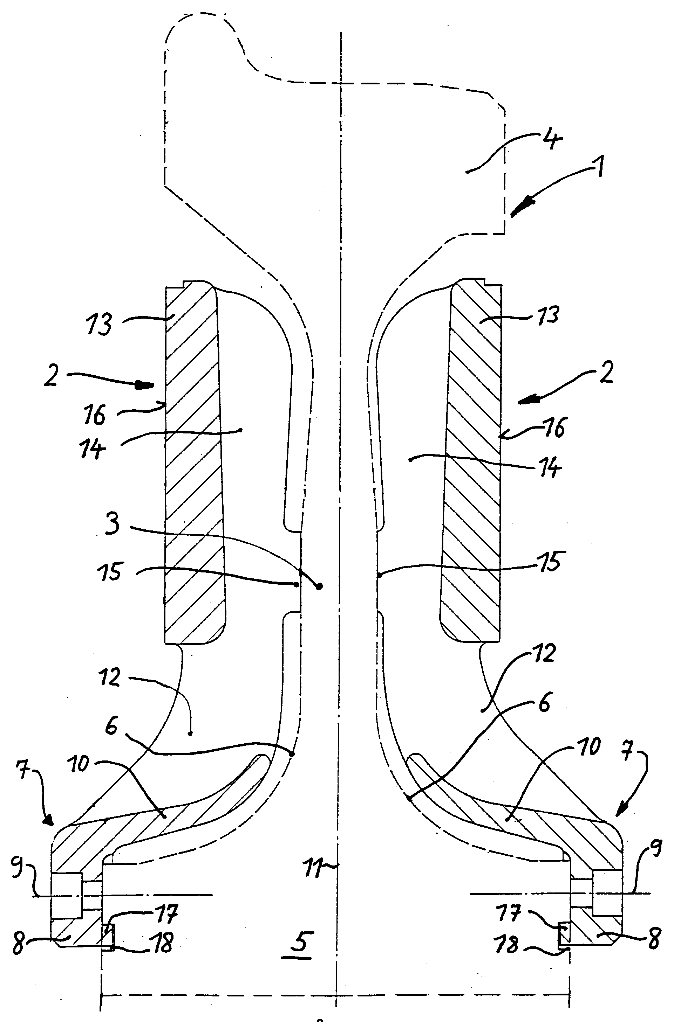

In der Zeichnung ist als Ausführungsbeispiel für ein nach der Erfindung ausgebildetes Schienenfahrzeugrad ein Schnittbild durch die beidseitig an einem nur gestrichelt angedeuteten Rad anzuordnenden Bremsscheiben dargestellt.

Gemäß der Zeichnung ist an einem Rad 1 des Schienenfahrzeugrades beidseitig je eine Bremsscheibe 2 angeordnet, die beiden Bremsscheiben 2 sind im wesentlichen, mit Ausnahme von Anpassungen an evtl. unsymmetrische Ausgestaltungen des Rades 1, zueinander gleichartig ausgebildet und spiegelbildlich angeordnet. Das Rad 1 weist eine Radscheibe 3 auf, an welchen sich nach radialaußen ein Radreifenabschnitt 4 und nach radialinnen ein axial verbreiterter Nabenabschnitt 5 unter Zwischenordnen von Übergangsrundungen 6 anschließen. Jede Bremsscheibe 2 weist einen Nabenring 7 auf, welcher mit einem im Querschnitt etwa rechteckigen Radialringabschnitt 8 an der radialen Seitenflanke des Nabenabschnittes 5 anliegt und diesen somit übergreift. Der Radialringabschnitt 8 ist vermittels achsparalleler, nur durch ihre Achsen angedeuteter Schrauben 9 mit dem Nabenabschnitt 5 verschraubt. Diese Verschraubung befindet sich in einem Bereich des Schienenfahrzeugrades, in welchem keine Rißgefährdung besteht. Radialaußen schließt sich an jeden Radialringabschnitt 8 ein Axialringabschnitt 10 an, welcher sich im wesentlichen zur Mittelebene 11 des Rades 1 hin erstreckt und die Übergangsrundung 6 annähernd bis zu deren Übergang in der Radscheibe 3 mit Spiel übergreift, zur Mittelebene 11 hin ist der Axialringabschnitt 10 gerundet radial erweitert. Im wesentlichen vom Axialringabschnitt 10 ausgehend erstrecken sich Speichen 12 nach radialaußen, welche dünnwandig, in Umfangsrichtung wesentlich schwächer als in Axialrichtung ausgebildet sind. Diese Speichen 12 erstrecken sich zum Reibring 13 der Bremsscheibe 2, sie sind mit ihrem axialäußeren Abschnitt an der radialinneren Begrenzung des Reibringes 13 angebunden, wobei sie zu diesem Bereich hin verstärkt bzw. verdickt sind, was aus der Zeichnung nicht ersichtlich ist. Im Bereich zwischen dem Reibring 13 und der Radscheibe 3 befinden sich vom Reibring 13 ausgehende, radiale Ventilationsrippen 14, welche über den größten Teil ihrer radialen Erstreckung mit Abstand vor der Radscheibe 3 enden. Im rückwärts zum Reibring 13, also zur Mittelebene 11 hin gelegenen Bereich gehen die Speichen 12 in die Ventilationsrippen 14 über, der Übergang ist dabei stetig, sprungfrei gestaltet. In einem Radialbereich dicht außerhalb der radialinneren Begrenzung des Reibringes 13 weisen die Ventilationsrippen 14 zur Radscheibe 3 vorspringende Nocken 15 auf, welche mit einem geringen, aus der Zeichnung nicht ersichtlichen Spielabstand vor der Radscheibe 3 mit einer zu deren Oberfläche parallelen, im wesentlichen radialen Fläche enden. Bei Axialbelastung des Reibringes 13 durch Anpressen einer nicht dargestellten Bremsbacke an dessen axialaußen befindliche Reibfläche 16 kann der erwähnte Spielabstand zwischen den Nocken 15 und der Radscheibenfläche durch geringfügige, elastische Verformung der Bremsscheibe 2 aufgezehrt werden, bis sich die Nocken 15 an die Radscheibe 3 anlegen und somit eine axiale Abstützung des Reibringes 13 bewirken.

Zur Zentrierung der Bremsscheibe 2 ist deren Radialringabschnitt 8 nahe dessen radialinnerer Begrenzung mit einem zur Mittelebene 11 hin vorspringenden, ringartigen Zentriernocken 17 versehen, welcher in eine entsprechende, an der seitlichen Radialringfläche des Nabenabschnittes 5 des Rades 1 befindliche Ringnut 18 eingreift. Statt dessen kann insbesondere am Übergang des Radialringabschnittes 8 zum Axialringabschnitt 10 auch eine innenzylindrische Führungsfläche vorgesehen sein, welche auf einer entsprechenden, zylindrischen Führungsfläche am Nabenabschnitt 5 aufsitzt; diese Zentrierung ist in der Zeichnung jedoch nicht dargestellt.

In Abänderung zu vorstehend beschriebenem Ausführungsbeispiel kann der Axialringabschnitt axial relativ kurz, sich nur über etwa die Hälfte des Abstandes von der Seitenflanke des Nabenabschnittes 5 zur Mittelebene 10 erstreckend, ausgebildet werden, wobei es genügt, ihn nicht gerundet, sondern kegelmantelartig sich erweiternd zu gestalten. Die Speichen 12 sind hierbei vom Axialringabschnitt der Übergangsrundung 6 angepaßt zur Radscheibe 3 hin ausschwingend zu gestalten. Die Speichen 12 können sich zum radialinneren Ansatz am Reibring 13 hin keilartig erweiternd ausgebildet sein, sie können auch zumindest in ihrem erwähnten Ansatzbereich im Querschnitt T-artig mit axialäußerem, in den Reibring 13 verlaufenden Verstärkungssteg ausgeformt sein.

Es ist wesentlich, daß die Bremsscheiben 2 mitsamt dem Nabenring 7, den Speichen 12, dem Reibring 13 und den Ventilationsrippen 14 einstückig aus einem Eisenwerkstoff, beispielsweise Stahl, Gußeisen oder Grauguß hergestellt ist. Die Anzahl der Speichen 12 sowie deren Gestaltung sowie insbesondere auch die Gestaltung des Nabenringes 7 mit dem Axialringabschnitt 10 sind derart zu wählen, daß das "Stülpmoment" des Reibringes 13 sicher aufgenommen wird. Eine Optimierung kann hier durch eine FEM-Rechnung erfolgen.

Das Schienenfahrzeugrad kann nur einseitig oder auch zu seinen beiden Seiten mit je einer Bremsscheibe 2 ausgestattet sein. Als besondere Vorteile dieses Schienenfahrzeugrades sind hervorzuheben, daß in der hoch beanspruchten Radscheibe 3 und auch im Bereich des Reibringes 13 keine Bohrungen erforderlich sind, daß durch die Schrauben 9 eine zur reibschlüssigen Übertragung der Bremsmomente ausreichende Pressung zwischen dem Radialringabschnitt 8 und dem Nabenabschnitt 5 in einfacher Weise erreichbar ist, daß höchstens nicht störende, geringe Verformungen des Reibringes 13 und insbesondere dessen Reibfläche 16 durch Temperatureinwirkungen auftreten, daß eine gute Belüftung und damit Wärmeabfuhr durch die Ventilationsrippen 14 und deren Verlängerung durch die Speichen 12 und die durch diese gebildeten, drosselstellenfreie Belüftungskanäle gegeben ist, daß eine einfache Montage und Demontage vermittels der Schrauben 9 möglich ist, daß eine hohe dynamische Belastbarkeit infolge Fehlens mechanischer, gesonderter Verbindungsglieder zwischen dem Reibring und der Bremsscheibennabe vorliegt, daß eine kostengünstige Fertigung möglich ist, daß eine Sichtprüfung der "Radwurzel", d.h. des Rades 1 im Bereich der Übergangsrundung 6 möglich ist und daß die Konzeption zudem bei vielen Auführungsformen von Rädern 1 möglich ist.

### Kurzfassung:

Das Schienenfahrzeugrad ist wenigstens einseitig mit einer einseitig beaufschlagbaren Bremsscheibe (2) versehen, welche einstückig aus einem Eisenwerkstoff gefertigt ist und im Nabenbereich mittels achsparalleler Schrauben (9) mit dem Nabenabschnitt (5) des Rades (1) verschraubt ist. Die Bremsscheibe (2) weist einen topfartigen Nabenring (7) auf, dessen Topfwandung der Übergangsrundung (6) des Radscheibenansatzes an dem Nabenabschnitt (5) mit geringem Abstand folgend zur Mittelebene (11) hin radial erweitert ist. Von dieser Topfwandung gehen nach radialaußen dünnwandige Speichen (12) aus, welche an der radialinneren Begrenzung des Reibringes (13) angebunden sind und in vom Reibring (13) zur Radscheibe (3) hin auskragende Ventilationsrippen (14) übergehen. Nahe der radialinneren Begrenzung des Reibringes (13) können die Ventilationsrippen (14) mit geringem Abstand vor der Radscheibe (3) endende, unter Bremszuspannkräften an diese anlegbare Nocken (15) aufweisen.

Der Reibring (13) mit seiner Reibfläche (16) ist durch Temperatureinflüsse höchstens geringfügig, in nicht störender Weise verformbar. Für die Bremsscheibe (2) ist eine gute Ventilationskühlung gegeben, der Reibring (13) mit der Reibfläche (16) sowie die Radscheibe (3) sind frei von Bohrungen, und die Herstellung sowie Montage der Bremsscheibe (2) ist einfach und billig.

### Bezugszeichenliste

- 1: Rad
- 2: Bremsscheibe
- 3: Radscheibe
- 4: Radreifenabschnitt
- 5: Nabenabschnitt
- 6: Übergangsrundung
- 7: Nabenring
- 8: Radialringabschnitt
- 9: Schraube
- 10: Axialringabschnitt
- 11: Mittelebene
- 12: Speiche
- 13: Reibring
- 14: Ventilationsrippe
- 15: Nocken
- 16: Reibfläche
- 17: Zentriernocken
- 18: Ringnut

## Patentansprüche

1. Schienenfahrzeugrad mit wenigstens einer Bremsscheibe (2), wobei das Rad (1) eine Radscheibe (3) und einen axial verbreiterten, mittels einer Übergangsrundung (6) anschließenden Nabenabschnitt (5) und die Bremsscheibe (2) einen am Nabenabschnitt (5) zentrierten und mittels achsparalleler Schrauben (9) gehaltenen Nabenring (7), von diesem im wesentlichen radial nach außen ragende Speichen (12) und einen von diesen getragenen Reibring (13) aufweist, wobei der Reibring (13) sich seitlich nahe der Radscheibe (3) befindet und radscheibenabgewandt eine Reibfläche (16) aufweist, dadurch gekennzeichnet, daß die Bremsscheibe (2) einstückig ist, ihr Nabenring (7) einen den Nabenabschnitt (5) seitlich übergreifenden und mit diesem verschraubten Radialringabschnitt (8) und einen an diesen radialaußen anschließenden, sich zur Übergangsrundung (6) hin erstreckenden und diese zumindest zu einem Teil mit Spiel übergreifenden Axialringabschnitt (10) aufweist, wobei der Axialringabschnitt (10) sich zur Radmitte (Mittelebene 11) hin radial erweitert, daß die Speichen (12) im wesentlichen sich vom Axialringabschnitt (10) nach radialaußen erstrecken, dünnwandig, in Umfangsrichtung wesentlich schwächer als in Axialrichtung ausgebildet sind, im Bereich ihrer Anbindung an den Reibring (13) verdickt sind und in im Bereich zwischen dem Reibring (13) und der Radscheibe (3) befindliche, von ersterem ausgehende, radiale Ventilationsrippen (14) übergehen.

2. Schienenfahrzeugrad nach Anspruch 1, wobei der Reibring (13) axial gegen die Radscheibe (3) abstützbar ist, dadurch gekennzeichnet, daß die Ventilationsrippen (14) nur in einem radial dicht außerhalb der radialinneren Begrenzung des Reibringes (13) befindlichen Ringabschnitt axial an die Radscheibe (3) anlegbar sind.

3. Schienenfahrzeugrad nach Anspruch 2, dadurch gekennzeichnet, daß die Ventilationsrippen (14) im Ringabschnitt einen bei Axialbelastung des Reibringes (13) durch eine Scheibenbremsenzuspannkraft aufzehrbaren Spielabstand zur Radscheibe (3) aufweisen.

4. Schienenfahrzeugrad nach Anspruch 2 oder 3, dadurch gekennzeichnet, daß die Ventilationsrippen (14) im Ringabschnitt zur Radscheibe (3) vorspringende, mit zur gegenüberliegenden Radscheibenoberfläche parallelen, im wesentlichen radialen Flächen endende Nocken (15) aufweisen.

5. Schienenfahrzeugrad nach einem oder mehreren der vorstehenden Ansprüche, dadurch gekennzeichnet, daß der Nabenabschnitt (5) des Rades (1) an einer seitlichen Radialringfläche eine Ringnut (18) aufweist, in welche ein ringartiger Zentriernocken (17) eingreift, welcher sich zumindest nahe der radialinneren Begrenzung des Nabenringes (7) an diesem befindet.

6. Schienenfahrzeugrad nach einem oder mehreren der vorstehenden Ansprüche, dadurch gekennzeichnet, daß die Speichen zumindest in ihrem sich zum radialinneren Ansatz am Reibring (13) hin erstreckenden Bereich sich zu diesem hin keilartig erweiternd ausgebildet sind.

7. Schienenfahrzeugrad nach einem oder mehreren der vorstehenden Ansprüche, dadurch gekennzeichnet, daß die Speichen zumindest in ihrem Ansatzbereich an der radialinneren Begrenzung des Reibringes (13) im Querschnitt T-artig mit axialäußerem, in den Reibring (13) verlaufenden Verstärkungssteg ausgebildet sind.

8. Schienenfahrzeugrad nach einem oder mehreren der vorstehenden Ansprüche, dadurch gekennzeichnet, daß der Axialringabschnitt sich axial über etwa die Hälfte der axialen Entfernung von der Seitenflanke des Nabenabschnittes (5) zur Radscheibe (3) hin, sich ggf. kegelmantelartig erweiternd, erstreckt und daß die Speichen der Übergangsrundung (6) angepaßt zur Radscheibe (3) hin ausschwingend gestaltet sind.

## Claims

1. Rail vehicle wheel with at least one brake disc (2), wherein the wheel (1) has a wheel disc (3) and an axially widened hub section (5) connecting by means of a transitional rounding (6) and the brake disc (2) has a hub ring (7) centred on the hub section (5) and held by means of axis-parallel screws (9), spokes (12) projecting substantially radially outwardly from said hub ring and a friction ring (13) supported by these, wherein the friction ring (13) is located laterally near the wheel disc (3) and has a friction surface (16) facing away from the wheel disc, characterised in that the brake disc (2) is formed in one piece, its hub ring (7) has a radial ring section (8) overlapping laterally the hub section (5) and screwed to it and an axial ring section (10) connecting radially outwardly to this, extending to the transitional rounding (6) and overlapping this at least partially with play, wherein the axial ring section (10) widens radially to the wheel middle (central plane 11), in that the spokes (12) extend substantially radially outward from the axial ring section (10), are formed, with thin walls, to be substantially thinner in the circumferential direction than in the axial direction, are thickened in the region of their connection to the friction ring (13) and change to radial ventilation ribs (14) located in the region between the friction ring (13) and the wheel disc (3), and emanating from the former.

2. Rail vehicle wheel according to claim 1, wherein the friction ring (13) is supported axially against the wheel disc (3), characterised in that the ventilation ribs (14) are able to be laid axially against the wheel disc (3) only in an annular portion located radially closely outside the radially inner limitation of the friction ring (13).

3. Rail vehicle wheel according to claim 2, characterised in that the ventilation ribs (14) have in the annular portion clearance relative to the wheel disc (3) which can be absorbed by a disc brake application force when there is axial load on the friction ring (13).

4. Rail vehicle wheel according to claim 2 or 3, characterised in that the ventilation ribs (14) in the annular portion have dogs (15) projecting towards the wheel disc (3) ending in substantially radial faces parallel to the opposing wheel disc surface.

5. Rail vehicle wheel according to one or several of the preceding claims, characterised in that the hub section (5) of the wheel (1) has an annular groove (18) on one lateral radial ring surface into which a ring-like centring dog (17) engages, which is located on the hub ring (7) at least close to its radial inner boundary.

6. Rail vehicle wheel according to one or several of the preceding claims, characterised in that the spokes are formed at least in their region extending towards the radially inner shoulder on the friction ring (13) widening in a wedge shape towards this ring.

7. Rail vehicle wheel according to one or several of the preceding claims, characterised in that the spokes are formed at least in their shoulder region on the radially inner boundary of the friction ring (13) in a T-shaped cross-section with an axially outward reinforcing web extending into the friction ring (13).

8. Rail vehicle wheel according to one or several of the proceeding claims, characterised in that the axial annular portion extends axially over approximately half of the axial distance of the side flank of the hub section (5) to the wheel disc (3), possibly widening in a cone shape, and in that the spokes are shaped swinging out towards the wheel disc (3) so as to match the transitional rounding (6).

## Revendications

1. Roue pour véhicule sur rail comportant au moins un disque de frein (2), dans lequel la roue (1) comporte un disque de roue (3) et une section de moyeu (5), qui est élargie axialement et est raccordée au moyen d'un arrondi de transition (6), et le disque de frein (2) comporte une frette de roue (7) qui est centrée sur la section de moyeu (5) et est retenue au moyen de vis (9) parallèles à l'axe, des rayons (12) qui font saillie vers l'extérieur, essentiellement radialement, à partir de cette frette de moyeu, et un anneau de frottement (13) porté par ces rayons, et l'anneau de frottement (13) est situé latéralement, à proximité du disque de roue (3) et possède, à l'opposé du disque de roue, une surface de frottement (16), caractérisé par le fait que le disque de frein (2) est réalisé d'un seul tenant, que sa frette de roue (7) possède une section annulaire radiale (8), qui s'engage latéralement par-dessus la section de moyeu (5) et est vissée à cette dernière, et une section annulaire axiale (10) qui se raccorde radialement vers l'extérieur à cette section annulaire radiale, s'étend en direction de l'arrondi de transition (6) et s'engage au moins partiellement avec jeu au-dessus de cet arrondi, la section annulaire axiale (10) s'élargissant radialement en direction du centre de la roue (plan médian 11), que les rayons (12) s'étendent radialement vers l'extérieur essentiellement à partir de la section annulaire axiale (10), sont réalisés avec une paroi mince nettement plus faible dans la direction circonférentielle que dans la direction axiale, sont épaissis dans la zone de leur jonction à l'anneau de frottement (13) et se prolongent par des ailettes radiales de ventilation (14), qui sont situées dans la zone comprise entre l'anneau de frottement (13) et le disque de roue (3) et s'étendent à partir de l'anneau de frottement.

2. Roue pour véhicule sur rail suivant la revendication 1, dans lequel l'anneau de frottement (13) peut être supporté axialement contre le disque de roue (3), caractérisé par le fait que les ailettes de ventilation (14) peuvent être appliquées axialement contre le disque de roue (3) uniquement dans une section annulaire située directement à l'extérieur de la limite radiale interne de l'anneau de frottement (13).

3. Roue pour véhicule sur rail suivant la revendication 2, caractérisé par le fait que les ailettes de ventilation (14) possèdent, dans la section annulaire, un jeu par rapport au disque de roue (3), qui peut être supprimé lors d'une charge axiale de l'anneau de frottement (13) par une force de serrage du frein à disque.

4. Roue pour véhicule sur rail suivant la revendication 2 ou 3, caractérisé par le fait que les ailettes de ventilation (14) possèdent, dans la section annulaire, des cames (15), qui se terminent par des surfaces essentiellement radiales, qui sont parallèles à la surface opposée du disque de roue.

5. Roue pour véhicule sur rail suivant une ou plusieurs des revendications précédentes, caractérisé par le fait que la section de moyeu (5) de la roue (1) possède, au niveau d'une surface annulaire radiale latérale, une gorge annulaire (18), dans laquelle s'engage un ergot annulaire de centrage (17), qui est situé au moins à proximité de la limite, intérieure du point de vue radial, de la frette de roue (7), sur cette dernière.

6. Roue pour véhicule sur rail suivant une ou plusieurs des revendications précédentes, caractérisé par le fait que les rayons sont réalisés avec une forme élargie en coin, au moins au niveau de leur partie qui s'étend en direction de la partie saillante, intérieure du point de vue radial, présente sur l'anneau de frottement (13).

7. Roue pour véhicule sur rail suivant une ou plusieurs des revendications précédentes, caractérisé par le fait que les rayons sont réalisés, au moins au niveau de leur partie saillante au niveau de la limite, intérieure du point de vue radial, de l'anneau de frottement (13), avec une section transversale en forme de T possédant une barrette de renforcement qui est située axialement à l'extérieur et se prolonge par l'anneau de frottement (13).

8. Roue pour véhicule sur rail suivant une ou plusieurs des revendications précédentes, caractérisé par le fait que la section annulaire axiale s'étend axialement sur à peu près la moitié de la distance axiale par rapport au flanc latéral de la section de moyeu (5) en direction du disque de roue (3), avec une forme élargie éventuellement à la manière d'une enveloppe conique, et que les rayons de l'arrondi de transition (6) sont agencés de manière à se terminer, de façon adaptée, en direction du disque de roue (3).
